# EUROPEAN PATENT APPLICATION

(11) **EP 1 583 060 A2**
(43) Date of publication of application: **05.10.2005**
(21) Application number: 05006877.4
(22) Date of filing: 30.03.2005
(51) Int. Cl.: G09B 5/06, G09B 19/06, G09B 1/00

(54) **Multisensory system for language learning**

(30) Priority: 31.03.2004 BR 0400095
(71) Applicant: POSITIVO INFORMATICA LTDA., Parana (BR)
(72) Inventor: Von Ridder, Sofia, Curitiba-Parana (BR); Finger, Roger Antonio, Curitiba-Parana (BR)
(74) Representative: Gonzalez Sanchez, German

(57) **Abstract**

"RECREATIONAL AND EDUCATIONAL SYSTEM FOR LANGUAGE LEARNING IN GENERAL", the present patent is described as a recreational and educational system for language learning in general which, according to the characteristics thereof, possesses as a principle to provide the formation of a recreational and educational system (1) with a proprietary and specific structure based on the perfect and harmonious interaction between a proprietary central unit (2) with a set of specific auxiliary materials and a computer with a set of particular computer programs, in order to provide a practical and multi-sensory approach to the learning of several different languages, by means of a proper and unlimited interaction between the target audience and the subject to be approached and having as a basis the incorporation of a proprietary structure possessing a properly integrated and symmetrically arranged central unit (2), a set of didactic blocks (3), a support mat (4), an identifying computer program and a set of computer programs with particular activities containing sound and image.

## Description

The present patent relates to recreational and educational systems in general, more specifically to a recreational and educational system for language learning in general which, according to the characteristics thereof, possesses as a basic principle to provide the formation of a recreational and educational system with a proprietary and specific structure directly based on the perfect and harmonious interaction between a proprietary central unit with a set of specific auxiliary materials and a computer with a set of particular computer programs, in order to provide a practical and multi-sensory approach to the learning of several different languages, whether it is one's own language or a foreign language, by means of a proper and unlimited interaction between the target audience, basically children and beginners with a different alphabet system, and the subject to be approached and having as a basis a didactic, approachable and versatile recreational and educational system. With a specific design and shape, easily accessible for a better adaptation and safety for the users, practical handling, functionality, and accessible cost and due to its general characteristics and dimensions, is easily adaptable to several different languages, users, places and computers in general, regardless of the characteristics thereof.

The patent in question is characterized in that it aggregates components and processes in a differentiated concept to meet the various requirements the nature of its use demands, that is, encourage and develop activities related to language learning in general. Such concept provides a recreational and educational system having great efficiency, functionality, durability, versatility, education, didactics and recreation due to its excellent technical qualities, thereby providing advantages and improvements to the recreational and educational systems involving languages, the general characteristics of which differ from the other shapes and models known in the current state of the art.

The present patent consists in the utilization of a modem, efficient, safe and functional recreational and educational system for language learning in general, formed by an assembly of properly incorporated educational, linguistic and computer-related solutions comprising a complete and differentiated recreational and education system with an exclusive design, optimum finish details and proprietary characteristics, incorporating a proprietary structure of high durability and strength and possessing a properly integrated and symmetrically arranged central unit forming the system central element, a set of didactic blocks constituting elements of interaction with the system, a support mat as an aid to the system, an identifying computer program as an element of identification of the didactic blocks and a set of computer programs with particular activities as the system management elements, so as to provide the formation of a learning and/or recreational assembly which is unique, complete and didactic and whose shape and internal and external arrangements provide the proper and direct connection to a computer and its accessories with the specific purpose of providing a physical, didactic and pleasant interaction with a language directly generated by the computer program and from the individualized work or the collaborative work with other group fellow students.

The recreational and educational system for language learning in general is a hands-on, innovative method for children between five and ten years old, basically true beginners in the learning of languages with a different alphabet system, since it is based on the well-known premise that children learn by doing, i.e., it provides unlimited interaction between the child and the subject matter, and can be used in any place such as kindergarten schools (private or public), elementary schools (private or public), language schools, teaching training centers, hospitals, among several other places where people wish to learn a language or have fun with it.

The present educational system is based on the application of components and processes in a differentiated concept providing initial literacy exposure and that can bring users to an exit level of thousands of words and expressions in a direct manner through different learning levels and based on international standards that allow it to be used either as a stand-alone course or together with commercially produced language learning books.

Language is the set of words and expressions used by a group of individuals or a nation, that is, the set of rules of its grammar.

The objects, advantages and other important characteristics of the patent in question can be more easily understood when read jointly with the appended drawings, wherein:

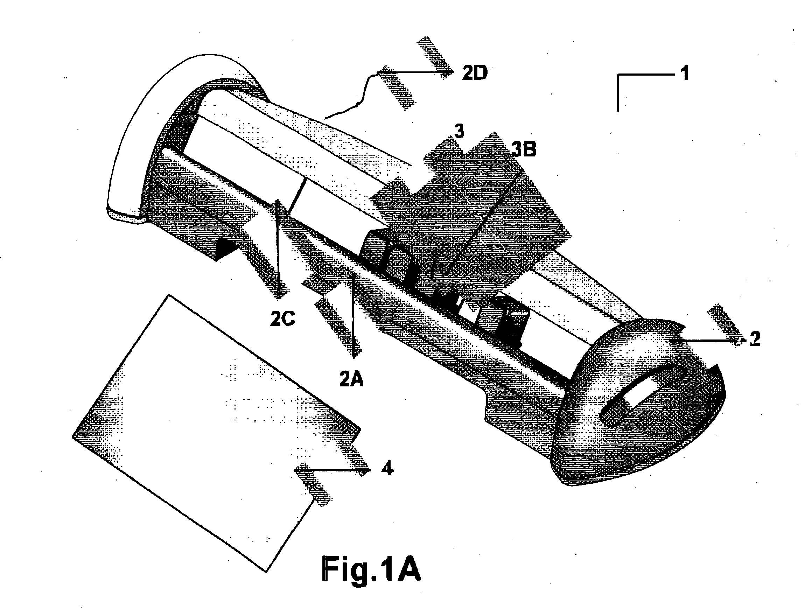

Figure 1A is a perspective view of the central unit of the recreational and educational system for language learning in general.

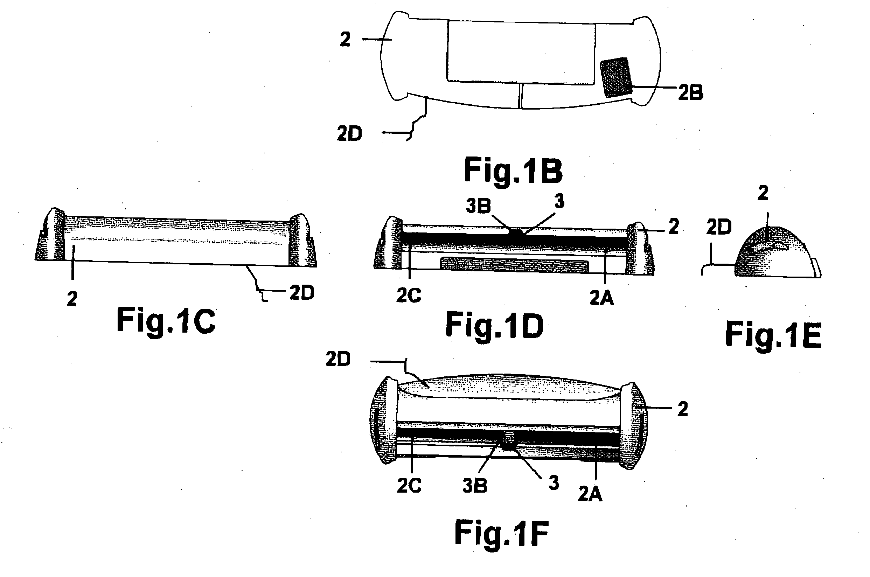

Figure 1B is a lower view of the central unit of the recreational and educational system for language learning in general.
Figure 1C is a rear view of the central unit of the recreational and educational system for language learning in general.
Figure 1D is a front view of the central unit of the recreational and educational system for language learning in general.
Figure 1E is a side view of the central unit of the recreational and educational system for language learning in general.
Figure 1F is an upper view of the central unit of the recreational and educational system for language learning in general.

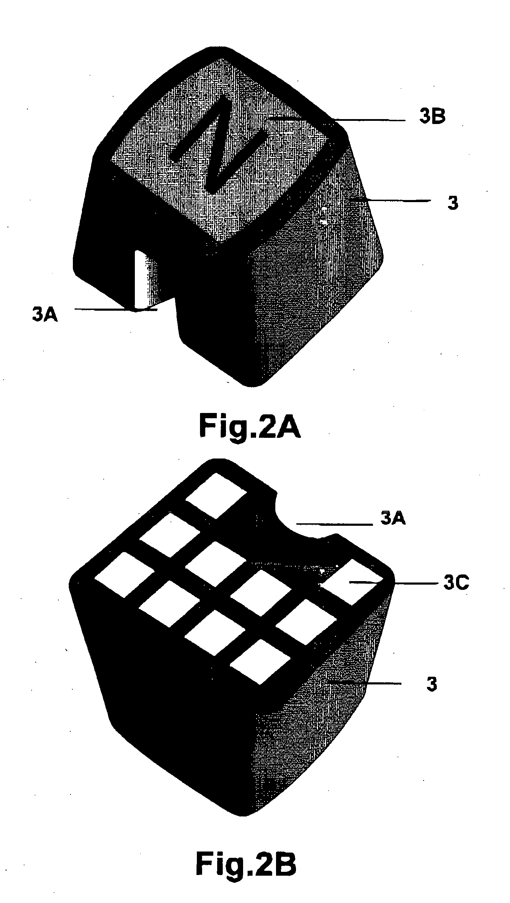

Figure 2A is an upper perspective view of a didactic block of the recreational and educational system for language learning in general.
Figure 2B is a lower perspective view of a didactic block of the recreational and educational system for language learning in general.

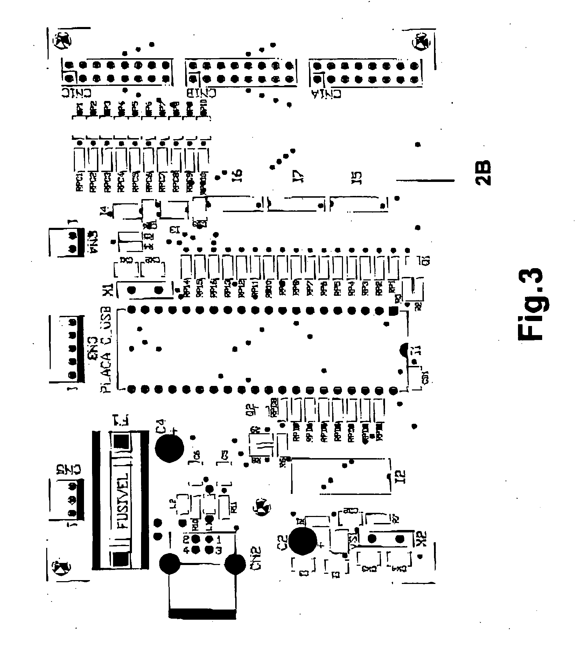

Figure 3 is the electrical diagram of the CPU plate of the recreational and educational system for language learning in general

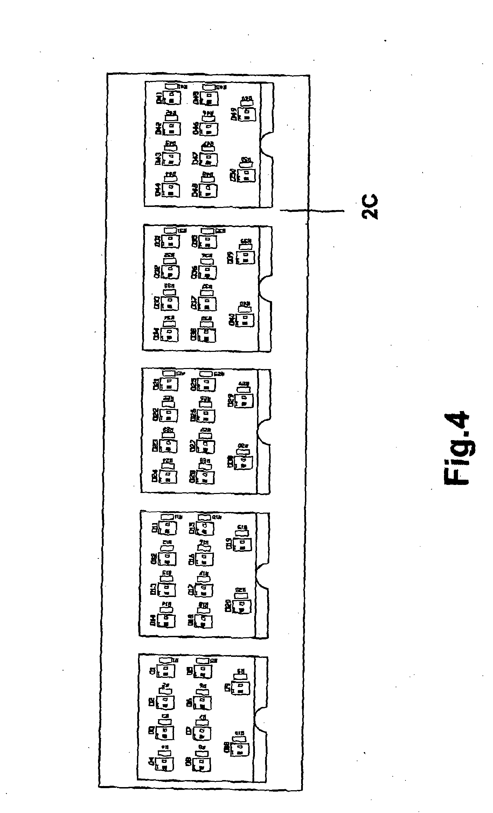

Figure 4 is the electrical diagram of the sensor plate of the recreational and educational system for language learning in general.

As can be inferred from the appended drawings that illustrate and integrate the present descriptive report of the patent of invention of "Recreational and Educational System for Language Learning in General", Figure (1) shows the same in a general manner, comprising a complete recreational and educational system (1) with proprietary characteristics, and incorporating a proprietary structure of high durability and strength, internal and external shapes and arrangements that provide the proper and direct connection to a computer and its accessories in general and possessing a properly integrated, customized and symmetrically arranged central unit (2) having a general prismatic shape and possessing a front frame (2A) having a parallelepipedal shape horizontally and symmetrically centered along the front face to lodge the didactic blocks (3), a CPU (central processing unit) plate (2B) symmetrically installed on the inner side as a control manager, a set of sensor plates (2C) having rectangular shapes horizontally and symmetrically centered and aligned along the inner periphery of the front frame (2A), each with a set of sensor plates symmetrically aligned as automatic identifiers of the didactic blocks (3) and a USB cable (2D) interconnecting the central unit (2) to the computer as a power, controls and data conductor; a set of didactic blocks (3) each having a general prismatic shape and possessing a curved recess (3A) symmetrically centered along one of lateral faces thereof, a picture (3B) representing letters, numbers, words and symbols or the like symmetrically centered on the front face and a code stamp (3C) symmetrically centered on the rear face to be used as interaction between the user and the recreational and educational system (1); a support mat (4) having a rectangular shape horizontally and symmetrically arranged on the front side of the central unit (2) to be used as a support for the didactic blocks (3); an identifying computer program to identify the didactic blocks (3); and a set of computer programs with particular activities containing sound and image based on the Microsoft Windows operational platform as an activity manager.

The recreational and educational system for language learning in general, according to the general application needs thereof, i.e., learning needs, can comprise a set of textbooks to be used as topic presentation or learning consolidation.

The recreational and educational system for language learning in general, according to the general application needs thereof, i.e., learning needs, can comprise a set of flash cards with words and pictures to be used as a visual pedagogic material.

The concept of the recreational and educational system for language learning in general is directly based on constructivism, the well-known educational theory that emphasizes practical problem solving, so that, through the direct interaction with the content, children generate their own set of rules and models that then become the basis for further learning experiences. Moreover, according to the principles of the Total Physical Response (TPR), a popular language teaching method, by means of which children learn language through the proper coordination between speech and action, the recreational and educational system (1) provides proper physical interaction with the language generated by the computer program and from individualized or collaborative work with their fellow group students.

The recreational and educational system for language learning in general, as based on its general concept, provides the users training on letter-sound correspondence, i.e., phonemic awareness; visual practice of words, letters, numbers and symbols; initial reading mechanics; reading comprehension skills; basic sentence structure awareness; extended listening comprehension practice; active vocabulary of thousands of words and expressions; large passive vocabulary, for recognition purposes only; and exposure to authentic accents of the most diverse languages.

The utilization of the recreational and educational system (1) is directly based on group work, although it can also be individualized, in which the users, with or without an instructor, sit around a table containing the central unit (2) connected to the computer. In a group work, the instructor initially establishes the learning environment by dividing the class into groups each with a unique symbol (represented by a picture easily recognizable for those who cannot read) and by deciding on how the group will be composed, in an heterogeneous way or not, depending on the needs of each class. By working in small groups, the users carry out the activities around the central unit (2) that includes: topic presentation through letters, numbers, symbols and words or the like introduced in a visually exciting format including sound and animation; educational practice through interactive activities including pictures, animations and sounds that reinforce the learning; learning consolidation through games, songs and rhymes; and learning revision through games.

The operation of the educational system (1) is based on the placement of the didactic blocks (3) symmetrically inside the front frame (2A) facing each of the sensor plates (2C) sensor pockets, so that the code stamp (3C) is in permanent contact with the sensor pockets and a picture (3B) representing letters, numbers, words and symbols or the like is arranged facing the users. This way, the response to the stimuli and questions presented is generated on the computer monitor screen. At the same time, exciting pictures, music, animation and games directly generated by the set of computer programs encourage cooperative interaction and make language learning a concrete social experience.

The educational system assembly (1) requires no technical knowledge from instructors or users - everything is clearly indicated and users registration is extremely straightforward. Furthermore, the recreational and educational system (1) provides an invaluable tool for instructors whose language being taught is not their native one by presenting it and allowing its practice through modeling and listening to native voices. For those who are not familiar with group work, the use of educational technology and the presentation of songs and chants are introduced simultaneously so as to facilitate its operation.

The components of the recreational and educational system for language learning are fully fitted and attached, do not present any distorting or breakable parts, is highly resistant and completely safe. After fitted and attached, the components are locked, thus preventing them from getting loose or breaking when in use, thus making the assembly fully available to users for a pleasant and funny learning of different languages. The recreational and educational system (1) can, therefore, be easily used for different kinds of users without worries of any nature as regarding durability and safety.

The recreational and educational system for language learning, by means of its basic premises, is proper for group work, since in each central unit (2) a group of users can sit and learn how to work together; has a hands-on approach, for the use of didactic blocks (3) to create answers appeals to the tactile senses and reinforces learning; is intellectually stimulating, as the product is based on problem-solving and not on mechanical learning; is interesting and relevant, since it is based on themes and subjects that are part of the universe of a child, organized in the order most appropriate for successful language acquisition; includes multiple activities using the same structure, for the set of computer programs presents a large number of different activities that use the same central unit (2) and didactic bloks (3); provides immediate feedback; encourages discussion and interaction, since users work together to find the right answer; and it is also thematic, since it is based on topics providing a familiar and relevant context.

For all of the above, this is a product that will be well received by individual users, schools, courses and teachers working with language learning, since the recreational and educational system for language learning presents several advantages, such as: great safety, reliability and agility of application; great efficiency and performance of application due to the general concept thereof; greater comfort, facility and safety to users; great durability and strength, lower or no wear of the assembly as a whole; accessible costs, which provides an optimum cost-benefic ratio; practical and safe use by any users, regardless of the characteristics thereof; low weight and general dimensions; great mobility and flexibility of the assembly; great versatility of applications and languages in general; modem design; great interactivity between users and equipment; and the certainty of always having a product that fully meets the basic conditions required for its application and the linguistic and didactic basic items.

For all of the above, the recreational and educational system for language learning can be used as a fully versatile, efficient, practical, safe and, mainly didactical and recreational means in which, by means of challenging activities, both concrete and virtual, a fully appropriate environment to dialogue and interaction among participants is created, and at the same time encourages development and the fundamental concepts in the learning process of different languages, regardless of the general characteristics thereof, being easily installed and handled, as well as having a great performance and excellent general characteristics; the sizes, dimensions and quantities may vary, depending on the use needs.

## Claims

1. "RECREATIONAL AND EDUCATIONAL SYSTEM FOR LANGUAGE LEARNING IN GENERAL", **characterized in that** it comprises a complete educational system (1) incorporating a proprietary structure whose shape and internal and external arrangements provide direct connection to a computer and its accessories and possessing a properly integrated, customized and symmetrically arranged central unit (2) having a general prismatic shape and possessing a front frame (2A) having a parallelepipedal shape horizontally and symmetrically centered along the front face to lodge the didactic blocks (3), a CPU (central processing unit) plate (2B) symmetrically installed on the inner side as a control manager, a set of sensor plates (2C) having rectangular shapes horizontally and symmetrically centered and aligned along the inner periphery of the front frame (2A), each with a set of sensor pockets symmetrically aligned as identifiers of the didactic blocks (3) and a USB cable (2D) interconnecting the central unit (2) to the computer as a power, controls and data conductor; a set of didactic blocks (3) each having a general prismatic shape and possessing a curved recess (3A) symmetrically centered along one of the lateral faces thereof, a picture (3B) representing letters, numbers, words and symbols or the like symmetrically centered on the front face and a code stamp (3B) symmetrically centered on the rear face to be used as interaction between the user and the educational system (1); a support mat (4) having a rectangular shape horizontally and symmetrically arranged on the front side of the central unit (2); an identification computer program to identify the didactic blocks (3); and a set of computer programs with particular activities containing sound and image based on the Microsoft Windows operational platform as an activity manager.

2. "RECREATIONAL AND EDUCATIONAL SYSTEM FOR LANGUAGE LEARNING IN GENERAL", in accordance with claim 1, **characterized in that** it comprises a set of textbooks as topic presentation or learning consolidation.

3. "RECREATIONAL AND EDUCATIONAL SYSTEM FOR LANGUAGEG LEARNING IN GENERAL", in accordance with 1, **characterized in that** it comprises a set of flash cards with words and pictures as a material for visual application.
